# EUROPÄISCHE PATENTSCHRIFT

(11) **EP 0 707 542 B1**
(45) Veröffentlichungstag und Bekanntmachung des Hinweises auf die Patenterteilung: **26.08.1998**
(21) Anmeldenummer: 95915756.1
(22) Anmeldetag: 08.04.1995
(51) Int. Cl.: B60K 15/077, F02M 37/22, F02M 37/10

(54) **EINRICHTUNG ZUM FÖRDERN VON KRAFTSTOFF AUS EINEM VORRATSTANK ZU EINER BRENNKRAFTMASCHINE**
DEVICE FOR CONVEYING FUEL FROM A FUEL TANK TO AN INTERNAL COMBUSTION ENGINE
DISPOSITIF POUR LE TRANSFERT DE CARBURANT D'UN RESERVOIR A UN MOTEUR A COMBUSTION INTERNE

(30) Priorität: 23.04.1994 DE 4414281
(43) Veröffentlichungstag der Anmeldung: 24.04.1996
(73) Patentinhaber: ROBERT BOSCH GMBH, 70442 Stuttgart (DE)
(72) Erfinder: KLEPPNER, Stephan, D-75015 Bretten (DE); FRANK, Kurt, D-73614 Schorndorf (DE)
(86) Internationale Anmeldenummer: DE9500478
(87) Internationale Veröffentlichungsnummer: WO9529075

(56) Entgegenhaltungen:
- EP-A- 0 266 482
- EP-A- 0 579 539
- EP-A- 0 579 540
- DE-A- 3 704 191
- FR-A- 1 488 772
- GB-A- 2 270 268
- JP-A- 3 105 055
- US-A- 5 195 494

## Beschreibung

### Stand der Technik

Die Erfindung geht von einer Einrichtung zum Fördern von Kraftstoff aus einem Vorratstank zu einer Brennkraftmaschine nach der Gattung des Patentanspruchs 1 aus. Bei einer solchen aus der EP-A-579 539 bekannten Einrichtung fördert ein in einen Vorratstank eingesetztes, aus einer elektrisch angetriebenen Förderpumpe gebildetes Förderaggregat Kraftstoff aus dem Vorratstank über eine Förderleitung zu einer Brennkraftmaschine. Das Förderaggregat ist dazu in ein am Vorratstank befestigtes rohrförmiges Führungsteil eingesetzt und weist an seinem unteren Ende einen in den Bodenbereich des Vorratstankes ragenden Ansaugstutzen und an seinem oberen Ende einen mit der Förderleitung verbundenen Druckanschluß auf. Um eine Beschädigung des Förderaggregates durch im Kraftstoff befindliche Schmutzpartikel zu vermeiden, ist dem Förderaggregat ein Kraftstoff-Filter vorgeschaltet, das auf den Ansaugstutzen aufgesteckt ist. Um auch eine Beschädigung der zu versorgenden Brennkraftmaschine sicher vermeiden zu können, ist es zudem aus dem Stand der Technik der Kraftstoff-Förderaggregate für Brennkraftmaschinen bekannt, in der Förderleitung ein der Brennkraftmaschine vorgeschaltetes zweites Kraftstofffilter vorzusehen, wobei diese getrennte Anordnung der beiden Filter jedoch den Nachteil eines relativ hohen Bau- und Montageaufwandes zur Folge hat.

Aus der Schrift JP-A-3-105055 ist bereits eine Einrichtung zum Fördern von Kraftstoff bekannt, bei der das Förderaggregat sowie ein diesem vor- und nachgeschaltetes Kraftstofffilter in einem gemeinsamen Filtergehäuse aufgenommen werden. Dabei weist diese bekannte Fördereinrichtung jedoch den Nachteil auf, daß sie durch das axiale hintereinander anordnen der Bauteile sehr groß baut und so einen relativ großen Bauraum im Vorratstank der zu versorgenden Brennkraftmaschine benötigt. Zudem ist das Filtergehäuse bei dieser bekannten Fördereinrichtung aus einer Vielzahl von einzelnen Bauteilen gebildet, was einen erheblichen Bau- und Montageaufwand verursacht.

### Vorteile der Erfindung

Die erfindungsgemäße Einrichtung zum Fördern von Kraftstoff aus einem Vorratstank zu einer Brennkraftmaschine mit den kennzeichnenden Merkmalen des Patentanspruchs 1 hat demgegenüber den Vorteil, daß die für ein möglichst sicheres Filtern des Kraftstoffes dem Förderaggregat vor- und nachgeschalteten Kraftstoffilter durch ein gemeinsames Filtergehäuse aufgenommen werden, in das zudem auch das Förderaggregat in einfacher Weise eingesteckt ist. Auf diese Weise läßt sich die gesamte Fördereinrichtung außerhalb des Vorratstanks vormontieren und wird dann lediglich als Einheit in den Vorratstank eingesetzt, was den Montage- und Fertigungsaufwand gegenüber bekannten Lösungen erheblich reduziert.
Dabei ist besonders vorteilhaft das Filtergehäuse so zu gestalten, daß das rohrförmige Führungsteil des Förderaggregates eine innere erste Kammer im gemeinsamen Filtergehäuse bildet und von der Wand des gemeinsamen Filtergehäuses derart umschlossen wird, daß eine zweite äußere Kammer zwischen dem Führungsteil und der Filtergehäusewand gebildet wird, in die ein Filter eingesetzt ist. Dieses Filter ist dabei der Form der zweiten Kammer entsprechend in vorteilhafter Weise als Ringfilter ausgeführt. Ein weiterer fertigungstechnischer Vorteil wird durch die einstückige Ausführung von Filtergehäuse und Führungsteil erreicht, wobei beide Teile durch eine ebenfalls mit diesen einstückige, das Filtergehäuse an seiner einen Stirnseite verschließende Stirnwand miteinander verbunden sind. Diese Stirnwand weist dabei eine den Ansaugstutzen aufnehmende Führungsbohrung auf und ist zum Teil topfförmig nach innen eingeformt, wobei diese Einformung in vorteilhafter Weise die Aufnahme des scheibenförmigen zweiten Filters ermöglicht, der somit einen Vorraum zum Ansaugstutzen innerhalb der Stirnwand begrenzt.
An einem das Filtergehäuse auf der der geschlossenen Stirnseite abgewandten Seite verschließenden Verschlußdeckel sind in vorteilhafter Weise die Druckanschlüsse vorgesehen, über die der Druckanschluß des Förderaggregates mit dem Ringfilter und der Ringfilter mit der Förderleitung verbindbar ist. Dabei ist es besonders vorteilhaft den Deckel derart doppelwandig auszuführen, daß die hydraulische Verbindung zwischen dem Druckanschluß des Förderaggregates und dem Ringfilter über den Verschlußdeckel erfolgt, so daß auf zusätzlich außen am Verschlußdeckel angebrachte hydraulische Verbindungsleitungen verzichtet werden kann, was wiederum den Fertigungsaufwand verringert.
Weitere Vorteile und vorteilhafte Ausgestaltungen des Gegenstandes der Erfindung sind der Zeichnung, der Beschreibung und den Ansprüchen entnehmbar.

### Zeichnung

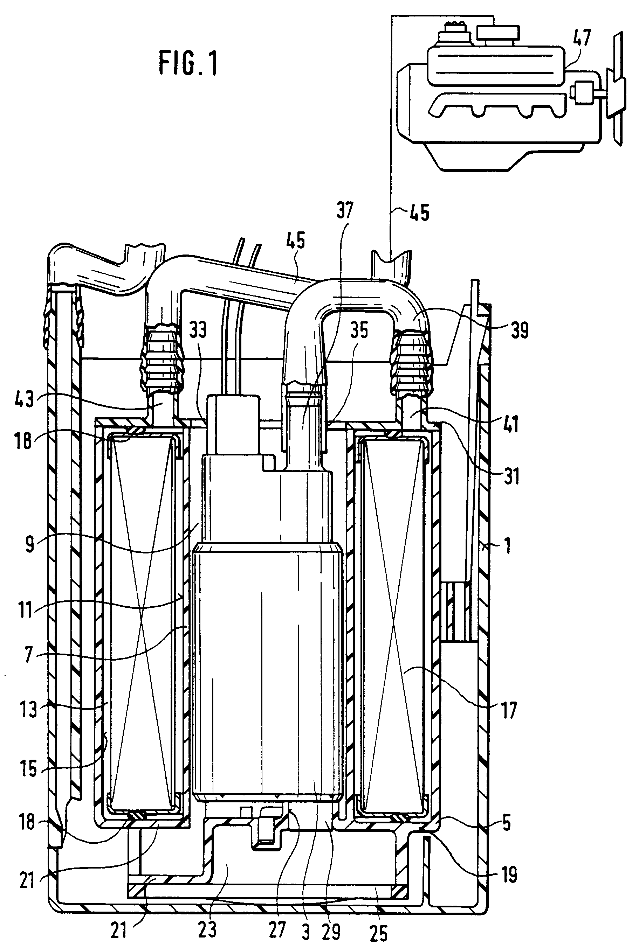

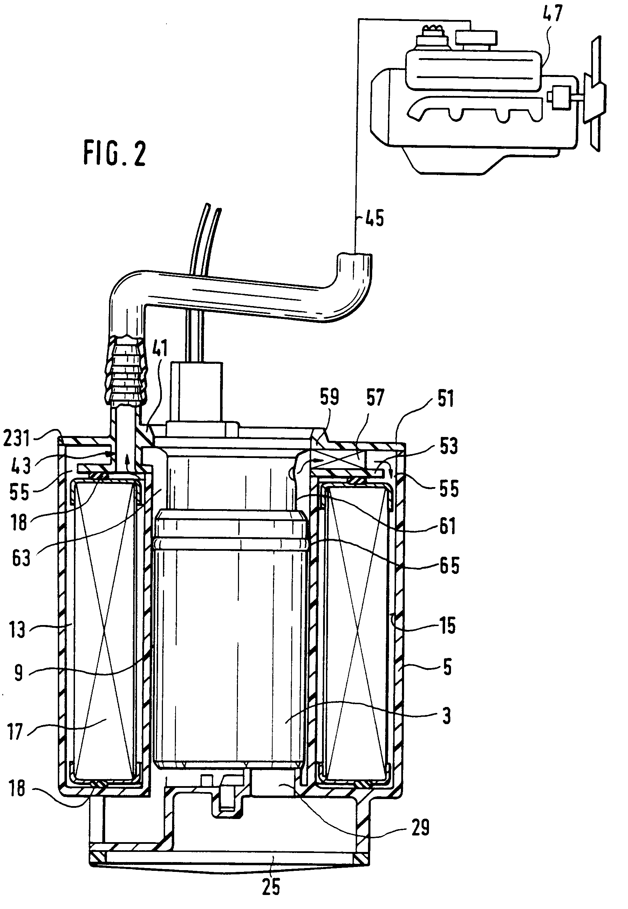

Zwei Ausführungsbeispiele der erfindungsgemäßen Kraftstöffordereinrichtung sind in der Zeichnung dargestellt und werden im folgenden näher erläutert.
Es zeigen die Figur 1 ein erstes Ausführungsbeispiel der Fördereinrichtung in einem vereinfachten Schnitt durch das gemeinsame Filtergehäuse, bei dem die hydraulische Verbindung zwischen dem Ringfilter und dem Förderaggregat über hydraulische Leitungen am Verschlußdeckel erfolgt und die Figur 2 ein zweites Ausführungsbeispiel analog zur Darstellung des ersten, mit einem doppelwandigen Verschlußdeckel.

### Beschreibung der Ausführungsbeispiele

Die in der Figur 1 dargestellte Kraftstoffördereinrichtung weist einen Kraftstoffvorratstank 1 auf, in den ein ein Förderaggregat 3 sowie ein diesem vorgeschaltetes und ein diesem nachgeschaltetes Kraftstoffilter aufnehmendes gemeinsames Filtergehäuse 5 eingesetzt ist. Das im wesentlichen zylinderförmig ausgebildete Filtergehäuse 5 weist dabei zwei Kammern auf, von denen eine erste Kammer 9 von einem zentrisch im Filtergehäuse 5 angeordneten rohrförmigen Führungsteil 7 gebildet wird, dessen Innendurchmesser geringfügig größer als der Außendurchmesser des ebenfalls zylinderförmigen Förderaggregates 3 ausgebildet ist und in das das vorzugsweise aus einer elektrisch angetiebenen Förderpumpe bestehende Förderaggregat 3 eingesteckt ist. Das Führungsteil 7 begrenzt mit seiner zylindrischen Umfangswand 11 eine zweite, das Führungsteil 7 ringförmig umgebende Kammer 13 innerhalb des Filtergehäuses 5, deren äußere Begrenzung durch die Innenwand 15 des Filtergehäuses 5 gebildet ist. In diese ringförmige zweite Kammer 13 ist ein der Form der Kammer 13 angepaßtes Ringfilter 17 eingesetzt.
Das Filtergehäuse 5 weist an seinem einen Ende eine über einen, die zweite Kammer 13 axial begrenzenden Absatz 19 gebildete Querschnittsverringerung auf und ist dort mittels einer Stirnwand 21 verschlossen, die in Verlängerung des Absatzes 19 bis zum Führungsteil 7 reicht und dieses so mit dem Filtergehäuse 5 verbindet. Die dabei vorzugsweise einstückig mit dem Filtergehäuse 5 und dem rohrförmigen Führungsteil 7 ausgebildete Stirnwand 21 ist zum Teil topfförmig nach innen eingeformt und bildet so einen Vorraum 23, der an seiner der Stirnwand 21 abgewandten Seite durch ein scheibenförmiges Filter 25 verschlossen wird. Dabei kann das scheibenförmige Filter 25 in einen an der Stirnwand 21 vorgesehenen Ringsteg eingepaßt werden oder wie in der Figur 1 dargestellt, mit einem Teil seiner scheibenförmigen Fläche am verbleibenden nicht eingeformten Stirnwandbereich befestigt sein. Die Stirnwand 21 weist weiterhin in ihrem eingeformten Bereich eine Führungsbohrung 27 auf durch die ein den Ansauganschluß des Förderaggregates 3 bildender Ansaugstutzen 29 in den Vorraum 23 ragt. Diese Führungsbohrung 27 ermöglicht dabei in konstruktiv einfacher Weise neben einer Verbindung des Förderaggregates 3 nach außen zudem dessen Lagefixierung innerhalb des rohrförmigen Führungsteils 7. Auf seiner der Stirnwand 21 abgewandten Seite wird das gemeinsame Filtergehäuse 5 durch einen Verschlußdeckel 31 verschlossen, der dichtend an den axialen Enden des Führungsteils 7 und des Filtergehäuses 5 anliegt und so im ersten Ausführungsbeispiel die erste Kammer 9 dichtend gegen die zweite Kammer 13 abgrenzt. Dabei sind im Verschlußdeckel 31 im Bereich der ersten Kammer 9 eine Öffnung 33 zur Durchführung des elektrischen Anschlusses des Förderaggregates 3 und eine Bohrung 35 zur Durchführung eines den Druckanschluß des Förderaggregates 3 bildenden Druckstutzens 37 vorgesehen. Der Druckanschluß 37 ist mittels einer hydraulischen Verbindungsleitung 39 mit einem in die zweite Kammer 13 mündenden Einlaßstutzen 41 am Verschlußdeckel 31 verbunden. Der Verschlußdeckel 31 weist im Bereich der zweiten Kammer 13 zudem einen gegenüber dem Einlaßstutzen 41 versetzten, ebenfalls in die zweite Kammer 13 mündenden Auslaßstutzen 43 auf, an den sich eine Förderleitung 45 zu einer Brennkraftmaschine 47 anschließt.
Für eine sichere axiale Lagerung des Ringfilters 17 ist zudem an dessen axialen Stirnflächen jeweils ein gummiartiger Dichtring 18 vorgesehen, der zwischen den axialen Stirnflächen des Ringfilters 17 und dem Verschlußdeckel 31 bzw. der Stirnwand 21 eingespannt ist. Dieser Dichtring 18 bewirkt zudem ein Abtrennen des an den Einlaßstutzen 41 angrenzenden äußeren Bereiches der zweiten Kammer 13 vom an den Auslaßstutzen 43 angrenzenden inneren Bereich der zweiten Kammer 13 und verhindert somit eine mögliche Kurzschlußströmung zwischen dem Einlaßstutzen 41 und dem Auslaßstutzen 43 ohne ein Durchströmen des Ringfilters 17. Die erfindungsgemäße Fördereinrichtung arbeitet in folgender Weise.
Während des Betriebs des Förderaggregates 3 wird über dessen Ansaugstutzen 29 Kraftstoff aus dem kraftstoffgefüllten Vorraum 23 angesaugt. Dieser Kraftstoff wird dabei bei seinem Einströmen vom Vorratstank 1 in den Vorraum 23 bei seinem Durchtritt durch das den Vorraum 23 begrenzende scheibenförmige Filter 25 gefiltert, wobei das scheibenförmige Filter 25 somit das dem Förderaggregat 3 vorgeschaltete Kraftstoffilter bildet. Im Förderaggregat 3 wird der Kraftstoff in bekannter Weise druckerhöht und strömt dann mit diesem erhöhten Druck über den Druckstutzen.37, die hydraulische Leitung 39 und den Einlaßstutzen 41 in die zweite Kammer 13. Dort durchströmt der Kraftstoff das Ringfilter 17 in radialer Richtung, wobei der Dichtring 18 ein Kurzschluß zwischen Einlaßstutzen 41 und Auslaßstutzen 43 wie vorstehend beschrieben verhindert. Nach Durchströmen des Ringfilters 17 tritt der Kraftstoff am Auslaßstutzen 43 aus und strömt von dort über die Förderleitung 45 der Brennkraftmaschine 47 zu. Das Ringfilter 17 bildet dabei das dem Förderaggregat 3 nachgeschaltete Kraftstoffilter, das eine Beschädigung der Brennkraftmaschine, insbesondere deren Einspritzeinrichtung, infolge Schmutz- oder Abriebpartikeln im Kraftstoff vermeidet.

Das in der Figur 2 dargestellte zweite Ausführungsbeispiel unterscheidet sich zum ersten Ausführungsbeispiel in der Ausgestaltung des Verschlußdeckels des Filtergehäuses 5 und der daran angeordneten Kraftstoffanschlüsse, so daß dessen Beschreibung auf diese gegenüber der Figur 1 geänderten Bauteile beschränkt ist.
Dabei ist der Verschlußdeckel 231 in der Figur 2 doppelwandig ausgeführt, mit einer das Filtergehäuse 5 nach außen dichtend verschließenden oberen Wand 51 und einer gegenüber dieser axial versetzten, in das Filtergehäuse 5 ragenden unteren Wand 53, die eine gegenüber der oberen Wand 51 geringere radiale Erstreckung aufweist, so daß zwischen ihr und der Innenwand 15 des Filtergehäuses 5 ein Spalt 55 verbleibt, über den Kraftstoff aus der ersten Kammer 9 in die zweite Kammer 13 überströmen kann, wobei der Dichtring 18 an den axialen Stirnflächen des Ringfilters 17 analog zum ersten Ausführungsbeispiel den einströmseitigen äußeren Bereich der zweiten Kammer 13 von deren ausströmseitigen inneren Bereich abtrennt, so daß ein radiales Durchströmen des Ringfilters 17 gewährleistet ist.
Die obere und untere Wand 51, 53 des einstückigen Verschlußdeckels 231 sind dabei mittels zwischen ihnen angeordnete Rippen 57 und den in die zweite Kammer 13 mündenden Auslaßstutzen 43, der durch die obere Wand 51 ragt, miteinander verbunden. Das Förderaggregat 3 weist auf seiner dem Ansaugstutzen 29 abgewandten Hochdruckseite wenigstens eine Auslaßöffnung 59 an seinem druckseitigen, im Durchmesser verringerten Gehäuseteil 61 auf, durch die der geförderte Kraftstoff im Bereich des Verschlußdeckels 231 in die erste Kammer 9 austritt, die dort einen Druckraum 63 bildet. Von dort strömt der Kraftstoff nun innerhalb des Filtergehäuses 5 über den doppelwandigen Verschlußdeckel 231 und den Spalt 55 in die zweite Kammer 13 über, aus der er nach Durchströmen des Ringfilters 17 über den Auslaßstutzen 43 in die Förderleitung 45 zur Brennkraftmaschine 47 gelangt.
Um dabei ein unkontrolliertes Abströmen des unter hohem Druck stehenden Kraftstoffes aus dem Druckraum 63 in den verbleibenden, die Saugseite bildenden Teil der ersten Kammer 9 zu vermeiden, ist zudem eine Dichtlippe 65 am Umfang des Förderaggregates 3 vorgesehen, die den Druckraum 63 sicher gegen den verbleibenden Teil der ersten Kammer 9 abdichtet und so gemeinsam mit dem dichtenden Abschluß zwischen den Kanten des Verschlußdeckels 231 und des Filtergehäuses 5 ein unkontrolliertes Abströmen von Kraftstoff verhindert, was einen möglichst hohen Wirkungsgrad der Fördereinrichtung gewährleistet.
Es ist dabei alternativ zur dargestellten Deckelausführung auch möglich, die obere Wand 51 des Deckels 231 geschlossen auszuführen und den Durchgang für die elektrischen Anschlußleitungen des Förderaggregates 3 an einer anderen Stelle des Filtergehäuses 5 vorzusehen.
Dabei weist das zweite Ausführungsbeispiel gegenüber dem ersten Ausführungsbeispiel zusätzlich zu einer vereinfachten Montage des vor- und nachgeschalteten Kraftstoffilters sowie des Förderaggregates im gemeinsamen Filtergehäuse den Vorteil auf, daß auf aufwendige hydraulische Verbindungsleitungen am Verschlußdeckel verzichtet werden kann, was den Fertigungsaufwand der gesamten Fördereinrichtung noch einmal verringert.

## Patentansprüche

1. Einrichtung zum Fördern von Kraftstoff aus einem Vorratstank (1) zu einer Brennkraftmaschine (47), mit einem in einem rohrförmigen Führungsteil (7) angeordneten Förderaggregat (3), das einen mit dem Vorratstank (1) verbundenen Ansauganschluß und einen wenigstens mittelbar mit einer Förderleitung (45) zur Brennkraftmaschine (47) verbundenen Druckanschluß aufweist und mit wenigstens einem am Förderaggregat (3) vorgesehenen Kraftstoffilter zwischen dem Vorratstank (1) und der Brennkraftmaschine (47), wobei die Fördereinrichtung jeweils ein dem Ansauganschluß des Förderaggregates (3) in Kraftstoffströmungsrichtung vorgeschaltetes und ein dem Druckanschluß des Förderaggregates (3) in Kraftstoffströmungsrichtung nachgeschaltetes Kraftstoffilter aufweist und wobei zur Aufnahme dieser Kraftstoffilter ein gemeinsames, das Förderaggregat (3) aufnehmendes Filtergehäuse (5) vorgesehen ist, das zwei Kammern aufweist, von denen eine erste Kammer (9) durch das das Förderaggregat aufnehmende rohrförmige Führungsteil (7) gebildet ist, das direkt an eine, einen der Kraftstoffilter aufnehmende zweite Kammer (13) angrenzt, dadurch gekennzeichnet, daß das gemeinsame Filtergehäuse (5) das rohrförmige Führungsteil (7) derart umschließt, daß zwischen dessen Umfangswand (11) und einer Innenwand (15) des vorzugsweise zylinderförmigen Filtergehäuses (5) die zweite Kammer (13) gebildet ist.

2. Einrichtung nach Anspruch 1, dadurch gekennzeichnet, daß das gemeinsame Filtergehäuse (5) und das darin angeordnete rohrförmige Führungsteil (7) durch eine das Filtergehäuse (5) an seinem einen axialen Ende verschließende Stirnwand (21) miteinander verbunden sind, wobei Filtergehäuse (5), Führungsteil (7) und Stirnwand (21) ein einstückiges Bauteil bilden.

3. Einrichtung nach Anspruch 2, dadurch gekennzeichnet, daß die Stirnwand (21) des gemeinsamen Filtergehäuses (5) wenigstens zum Teil topfförmig nach innen eingeformt ist und an ihrem offenen Ende den anderen vorzugsweise scheibenförmig ausgebildeten Kraftstoffilter (25) aufnimmt, der dabei einen Vorraum (23) an dem topfförmigen Teil der Stirnwand (21) begrenzt.

4. Einrichtung nach Anspruch 3, dadurch gekennzeichnet, daß eine Führungsbohrung (27) in der Stirnwand (21) des gemeinsamen Filtergehäuses (5) im Bereich der topfförmigen Einformung vorgesehen ist, durch die ein den Ansauganschluß des Förderaggregats (3) bildender Ansaugstutzen (29) in den Vorraum (23) ragt.

5. Einrichtung nach Anspruch 1, dadurch gekennzeichnet, daß das in der zweiten Kammer (13) des Filtergehäuses (5) angeordnete eine Kraftstoffilter als Ringfilter (17) ausgebildet ist.

6. Einrichtung nach Anspruch 5, dadurch gekennzeichnet, daß die zweite Kammer (13) eine mit dem Druckanschluß des Förderaggragats (3) verbundene Einlaßöffnung und eine mit der Förderleitung (45) zur Brennkraftmaschine (47) verbundene Auslaßöffnung aufweist.

7. Einrichtung nach Anspruch 6, dadurch gekennzeichnet, daß das der Stirnwand (21) abgewandte axiale Ende des gemeinsamen Filtergehäuses (5) durch einen Verschlußdeckel (31, 231) nach außen verschlossen ist.

8. Einrichtung nach den Ansprüchen 6 und 7, dadurch gekennzeichnet, daß der Verschlußdeckel (31) die zweite Kammer (13) im Filtergehäuse (5) vollständig abdichtet, wobei im Verschlußdeckel (31) im Bereich der ersten Kammer (9) eine Durchgangsöffnung (35) angeordnet ist, durch die ein den Druckanschluß des Förderaggregats (3) bildender Druckstutzen (37) ragt, der mittels einer hydraulischen Verbindungsleitung (39) mit einem, die Einlaßöffnung in die zweite Kammer (13) bildenden Einlaßstutzen (41) am Verschlußdeckel (31) im Bereich der zweiten Kammer (13) verbunden ist und mit einem gegenüber dem Einlaßstutzen (41) versetzten, die Auslaßöffnung aus der zweiten Kammer (13) bildenden Auslaßstutzen (43) im Bereich der zweiten Kammer (13), an den die Förderleitung (45) zur Brennkraftmaschine (47) angeschlossen ist.

9. Einrichtung nach den Ansprüchen 6 und 7, dadurch gekennzeichnet, daß der Verschlußdeckel (231) doppelwandig ausgeführt ist, mit einer das Filtergehäuse (5) nach außen dichtend verschließenden oberen Wand (51) und einer gegenüber dieser axial versetzten unteren Wand (53) mit einer gegenüber der oberen Wand (51) geringeren radialen Erstreckung, wobei die Wände (51, 53) mittels eines die Auslaßöffnung der zweiten Kammer (13) bildenden Auslaßstutzens (43) und zwischen den Wänden angeordnete Rippen (57) derart verbunden sind, daß die erste und zweite Kammer (9, 13) des Filtergehäuses (5) über den zwischen den Wänden (51, 53) verbleibenden Ringspalt und einen zwischen der unteren Wand (53) und der Innenwand (15) des Filtergehäuses (5) verbleibenden Spalt (55) hydraulisch miteinander verbunden sind.

10. Einrichtung nach Anspruch 9, dadurch gekennzeichnet, daß der Druckanschluß des Förderaggregats (3) durch eine radiale Auslaßöffnung (59) in dessen druckseitigem Gehäuseteil (61) gebildet ist, über die der im Förderaggregat (3) geförderte Kraftstoff auf der an den Verschlußdeckel (231) angrenzenden Seite in einen Druckraum (63) innerhalb der ersten Kammer (9) austritt.

11. Einrichtung nach den Ansprüchen 3 und 5, dadurch gekennzeichnet, daß das dem Förderaggregat (3) vorgeschaltete Kraftstoffilter durch das den Vorraum (23) bedrenzende scheibenförmige Filter (25) und das dem Förderaggregat (3) nachgeschaltete Kraftstoffilter durch das in der zweiten Kammer (13) angeordnete Ringfilter (17) gebildet wird.

12. Einrichtung nach Anspruch 1, dadurch gekennzeichnet, daß das Förderaggregat (3) als elektrisch angetriebene Förderpumpe ausgebildet ist, deren Gehäuse in Form einer Steckverbindung im rohrförmigen Führungsteil (7) geführt ist.

13. Einrichtung nach Anspruch 1, dadurch gekennzeichnet, daß das gemeinsame Filtergehäuse (5) innerhalb des Vorratstanks (1) angeordnet ist.

## Claims

1. Device for feeding fuel out of a supply tank (1) to an internal combustion engine (47), with a feed assembly (3) which is arranged in a tubular guide part (7) and which has a suction connection, connected to the supply tank (1), and a delivery connection, connected at least indirectly to a feed line (45) to the internal combustion engine (47), and with at least one fuel filter, provided on the feed assembly (3), between the supply tank (1) and the internal combustion engine (47), the feed device having in each case a fuel filter located upstream of the suction connection of the feed assembly (3) in the fuel flow direction and a fuel filter located downstream of the delivery connection of the feed assembly (3) in the fuel flow direction, and there being provided for receiving these fuel filters a common filter housing (5) which receives the feed assembly (3) and which has two chambers, of which a first chamber (9) is formed by the tubular guide part (7) receiving the feed assembly, the said guide part being directly adjacent to a second chamber (13) receiving the fuel filter, characterized in that the common filter housing (5) surrounds the tubular guide part (7) in such a way that between the circumferential wall (11) of the latter and an inner wall (15) of the preferably cylindrical filter housing (5) is formed the second chamber (13).

2. Device according to Claim 1, characterized in that the common filter housing (5) and the tubular guide part (7) arranged therein are connected to one another by means of an end wall (21) closing the filter housing (5) at one axial end of the latter, the filter housing (5), guide part (7) and end wall (21) forming a one-piece structural part.

3. Device according to Claim 2, characterized in that the end wall (21) of the common filter housing (5) is shaped inwards, at least partially, in the form of a pot and, at its open end, receives the other preferably disc-shaped fuel filter (25) which, in this case, delimits an antechamber (23) on the pot-shaped part of the end wall (21).

4. Device according to Claim 3, characterized in that a guide bore (27) is provided in the end wall (21) of the common filter housing (5) in the region of the portion shaped inwards in the form of a pot, a suction nipple (29), which forms the suction connection of the feed assembly (3), projecting through the said guide bore into the antechamber (23).

5. Device according to Claim 1, characterized in that the fuel filter arranged in the second chamber (13) of the filter housing (5) is designed as an annular filter (17).

6. Device according to Claim 5, characterized in that the second chamber (13) has an inlet port, connected to the delivery connection of the feed assembly (3), and an outlet port, connected to the feed line (45) to the internal combustion engine (47).

7. Device according to Claim 6, characterized in that that axial end of the common filter housing (5) which faces away from the end wall (21) is closed relative to the outside by means of a closing cover (31, 231).

8. Device according to Claims 6 and 7, characterized in that the closing cover (31) completely seals off the second chamber (13) in the filter housing (5), there being arranged in the closing cover (31), in the region of the first chamber (9), a passage orifice (35), through which projects a delivery nipple (37) which forms the delivery connection of the feed assembly (3) and which is connected, in the region of the second chamber (13), by means of a hydraulic connecting line (39) to an inlet nipple (41) located on the closing cover (31) and forming the inlet port into the second chamber (13) and is connected, in the region of the second chamber (13), to an outlet nipple (43) which is offset relative to the inlet nipple (41) and forms the outlet port out of the second chamber (13) and to which the feed line (45) to the internal combustion engine (47) is connected.

9. Device according to Claims 6 and 7, characterized in that the closing cover (231) is of double-walled design, with an upper wall (51), closing the filter housing (5) sealingly relative to the outside, and a lower wall (53), offset axially relative to the said upper wall and having a smaller radial extent than the upper wall (51), the walls (51, 53) being connected by means of an outlet nipple (43), forming the outlet port of the second chamber (13), and ribs (57), arranged between the walls, in such a way that the first and second chambers (9, 13) of the filter housing (5) are connected hydraulically to one another via the annular gap remaining between the walls (51, 53) and via a gap (55) remaining between the lower wall (53) and the inner wall (15) of the filter housing (5).

10. Device according to Claim 9, characterized in that the delivery connection of the feed assembly (3) is formed by a radial outlet port (59) in the delivery-side housing part (61) of the said feed assembly, via which outlet port the fuel fed in the feed assembly (3) emerges into a delivery space (63) within the first chamber (9) on the side adjacent to the closing cover (231).

11. Device according to Claims 3 and 5, characterized in that the fuel filter located upstream of the feed assembly (3) is formed by the disc-shaped filter (25) delimiting the antechamber (23), and the fuel filter located downstream of the feed assembly (3) is formed by the annular filter (17) arranged in the second chamber (13).

12. Device according to Claim 1, characterized in that the feed assembly (3) is designed as an electrically driven feed pump, the housing of which is guided in the form of a plug connection in the tubular guide part (7).

13. Device according to Claim 1, characterized in that the common filter housing (5) is arranged within the supply tank (1).

## Revendications

1. Dispositif servant à transférer du carburant d'un réservoir (1) vers un moteur à combustion interne (47), avec un sous-ensemble de transfert (3), qui est disposé dans une pièce de guidage (7) de forme tubulaire, et qui présente un raccord d'aspiration, relié au réservoir (1) et un raccordement sous pression, relié au moins indirectement à une conduite de transfert (45) allant au moteur à combustion interne (47), et avec au moins un filtre à carburant, prévu sur le sous-ensemble de transfert (3), entre le réservoir (1) et le moteur à combustion interne (47), le dispositif de transfert présentant respectivement un filtre à carburant monté en avant du raccord d'aspiration du sous-ensemble de transfert (3) dans le sens de l'écoulement du carburant, et un filtre à carburant monté après le raccordement sous pression du sous-ensemble de transfert (3) dans le sens de l'écoulement du carburant et un boîtier de filtre (5), commun, recevant le sous-ensemble de transfert (3) étant prévu pour recevoir ces filtres à carburant, boîtier de filtre (5) qui présente deux chambres, une première chambre (9) étant constituée par la pièce de guidage (7), de forme tubulaire, qui reçoit le sous-ensemble de transfert (3) et qui est directement adjacente à une deuxième chambre (13), qui reçoit les filtres à carburant,
caractérisé en ce que
le boîtier de filtre commun (5) entoure la pièce de guidage (7), de forme tubulaire, d'une manière telle que la seconde chambre (13) est formée entre sa paroi périphérique (11) et une paroi intérieure (15) du boîtier de filtre 5), qui a de préférence une forme cylindrique.

2. Dispositif selon la revendication 1,
caractérisé en ce que
le boîtier de filtre commun (5) et la pièce de guidage (7), de forme tubulaire, disposée dedans, sont reliés ensemble par une paroi frontale (21) qui ferme le boîtier de filtre (5) à l'une de ses extrémités axiales, le boîtier de filtre (5), la pièce de guidage (7) et la paroi frontale (21) formant une pièce constitutive d'un seul tenant.

3. Dispositif selon la revendication 2,
caractérisé en ce que
la paroi frontale (21) du boîtier de filtre commun (5) est moulé vers l'intérieur au moins en partie en forme de pot et reçoit à son extrémité ouverte l'autre filtre à carburant (25), constitué de préférence en forme de disque, et qui dans ce cas délimite une antichambre (23) sur la partie en forme de pot de la paroi frontale (21).

4. Dispositif selon la revendication 3,
caractérisé en ce que
l'on prévoit un alésage de guidage (27) dans la paroi frontale (21) du boîtier de filtre commun (5) dans la zone du moulage en forme de pot, alésage de guidage (27) à travers lequel un ajutage d'aspiration (29), qui forme le raccordement d'aspiration du sous-ensemble de transfert (3), pénètre dans l'antichambre (23).

5. Dispositif selon la revendication 1,
caractérisé en ce que
l'un des filtres à carburant, qui est disposé dans la deuxième chambre (13) du boîtier de filtre (5), est constitué sous la forme d'un filtre annulaire (17).

6. Dispositif selon la revendication 5,
caractérisé en ce que
la deuxième chambre (13) présente un orifice d'entrée, qui est relié au raccordement sous pression du sous-ensemble de transfert (3) et un orifice de sortie, qui est relié à la conduite de transfert (45) allant au moteur à combustion interne (47).

7. Dispositif selon la revendication 6,
caractérisé en ce que
l'extrémité axiale, qui est située à l'opposé de la paroi frontale (21) est fermée par un couvercle d'obturation (31, 231) vers l'extérieur

8. Dispositif selon les revendications 6 et 7,
caractérisé en ce que
le couvercle d'obturation (31) assure complètement l'étanchéité de la deuxième chambre (13) dans le boîtier de filtre (5), un orifice de passage (35) étant disposé dans le couvercle d'obturation (31) dans la région de la première chambre (9), orifice de passage (35) à travers lequel pénètre un ajutage de pression (37), qui forme le raccordement sous pression du sous-ensemble de transfert (3) et qui est relié au moyen d'une conduite hydraulique de liaison (39) à un ajutage d'entrée (41), qui forme l'orifice d'entrée dans la deuxième chambre (13), sur le couvercle d'obturation (31) dans la région de la deuxième chambre (13) et à un ajutage de sortie (43), décalé par rapport à l'ajutage d'entrée (41), et qui forme l'orifice de sortie de la deuxième chambre (13), dans la région de la deuxième chambre (13), à laquelle est raccordée la conduite de transfert (45) qui va au moteur à combustion interne (47).

9. Dispositif selon les revendications 6 et 7,
caractérisé en ce que
le couvercle d'obturation (231) est réalisé à double paroi, avec une paroi supérieure (51) qui obture de façon étanche le boîtier de filtre (5) vers l'extérieur et avec une paroi inférieure (53), qui est décalée axialement par rapport à la précédente avec une plus faible extension radiale que celle de la paroi supérieure, les parois (51, 53) étant reliées au moyen d'un ajutage de sortie (43), qui forme l'orifice de sortie de la deuxième chambre (13) et de nervures (57), qui sont disposées entre les parois, d'une manière telle que la première et la deuxième chambre (9, 13) du boîtier de filtre (5) sont reliées hydrauliquement ensemble au moyen de la fente annulaire qui subsiste entre les parois (51, 53) et une fente (55) qui subsiste entre la paroi inférieure (53) et la paroi intérieure (15) du boîtier de filtre (5).

10. Dispositif selon la revendication 9,
caractérisé en ce que
le raccordement sous pression du sous-ensemble de transfert (3) est formé par un orifice radial de sortie (59) dans la partie de son boîtier (61), qui est située du côté sous pression, orifice de sortie (59) dans lequel le carburant, qui est transféré dans le sous-ensemble de transfert (3), sort sur le côté adjacent au couvercle d'obturation (231) dans une chambre sous pression (63) à l'intérieur de la première chambre (9).

11. Dispositif selon les revendications 3 et 5,
caractérisé en ce que
le filtre à carburant, qui est monté en avant du sous-ensemble de transfert (3) est formé par le filtre (25) en forme de disque, qui délimite l'antichambre (23), et le filtre à carburant, qui est monté après le sous-ensemble de transfert (3) est formé par le filtre annulaire (17), qui est disposé dans la deuxième chambre (13).

12. Dispositif selon la revendication 1,
caractérisé en ce que
le sous-ensemble de transfert (3) est constitué sous la forme d'une pompe de transfert entraînée électriquement, dont on fait passer le boîtier qui se présente sous la forme d'une connexion dans la pièce de guidage (7) de forme tubulaire.

13. Dispositif selon la revendication 1,
caractérisé en ce que
le boîtier de filtre commun (5) est disposé à l'intérieur du réservoir (1).
